# EUROPÄISCHE PATENTSCHRIFT

(11) **EP 4 024 022 B1**
(45) Veröffentlichungstag und Bekanntmachung des Hinweises auf die Patenterteilung: **03.07.2024**
(21) Anmeldenummer: 21217814.9
(22) Anmeldetag: 27.12.2021
(51) Int. Cl.: G01M 3/22

(54) **GELÄNDE-GASPRÜFVORRICHTUNG**
SITE GAS TESTING DEVICE
DISPOSITIF DE DÉTECTION DE GAZ SUR LE TERRAIN

(30) Priorität: 30.12.2020 DE 202020107608 U
(43) Veröffentlichungstag der Anmeldung: 06.07.2022
(73) Patentinhaber: Schütz GmbH Messtechnik, 77933 Lahr (DE)
(72) Erfinder: HEIMBURGER, Volker, 77974 Meissenheim (DE)
(74) Vertreter: mepat Patentanwälte

(56) Entgegenhaltungen:
- DE-A1- 3 924 337
- JP-A- S5 987 332
- US-A- 3 364 727
- US-A- 3 416 357
- US-A- 3 444 721
- US-A1- 2020 104 989

## Beschreibung

Die Erfindung betrifft ein Gasmessfahrzeug, das zur Prüfung von Gasvorkommen in freiem Gelände ausgebildet ist.

Die Überprüfung von Gasleitungen, die unterhalb von Wegen und Straßen und folglich unter gut befahrbarem Terrain verlegt sind, ist bereits bekannt und eine hierfür einsetzbare Vorrichtung und deren Durchführungsverfahren sind in der DE 39 24 337 offenbart. Dort wird eine an einem Straßenfahrzeug angeordnete Sonde mit einem Messsystem zum Detektieren des entsprechenden Gases entlang des Gasleitungsnetzes, das unter den Straßen liegt, verfahren. Es wurde dort nach der DVGW Vorschrift Nr. G 465 I vorgegangen und mittels der Sonde eine Gasprobe dicht oberhalb der Erdoberfläche abgesaugt und dem Messsystem zugeführt, wobei Referenzsonden zur Kompensation von Störgas basierten Anteilen, also Gasen, die etwa auf Grund von Umweltverschmutzung in die Atmosphäre gelangen, eingesetzt wurden. Die Sonden dort sind an einer Absenkvorrichtung angeordnet und von Matten umgeben.

US3444721 offenbart ein Gasmessfahrzeug zur Prüfung von Gasvorkommen in freiem Gelände, an dem eine Gasmessvorrichtung mit einem gasdichten Rohr mit einer Mehrzahl von Anschlussstutzen die mit einer Ansaugleitung verbunden sind.

Es ist auch bekannt, in unwegsamerem Gelände Fahrzeuge mir daran angeordneten Sondiervorrichtungen für Gas einzusetzen; die Sondiervorrichtungen werden dabei wie der Schieber von Schneeschiebern oder ähnlichen Vorrichtungen an einer Halterung angeordnet, die frontseitig an dem Fahrzeug angeordnet ist - und die folglich jedem im freien Gelände vorliegenden Hindernis zuerst begegnet und Verschmutzung stark ausgesetzt ist.

Ausgehend von diesem Stand der Technik ist es Aufgabe der vorliegenden Erfindung, ein verbessertes Gasmessfahrzeug bereit zu stellen, das es ermöglicht, auch in unwegsamem Gelände Gasvorkommen zu prüfen.

Diese Aufgabe wird durch ein Gasmessfahrzeug mit den Merkmalen des Anspruchs 1 gelöst.

Weiterbildungen des Gasmessfahrzeugs sind in den jeweiligen Unteransprüchen ausgeführt.

Ein erfindungsgemäßes Gasmessfahrzeug, das zur Prüfung von Gasvorkommen in freiem Gelände ausgebildet ist, weist eine Gasmessvorrichtung auf. Die Gasvorkommen können bspw. durch Gasaustritt aus Gasleitungen, die in Feld, Wald und Wiese und mithin in unwegsamem Gelände verlegt sind, verlegt sein. Daher ist das erfindungsgemäße Gasmessfahrzeug ein Geländefahrzeug mit einem Allradantrieb. Die Gasmessvorrichtung weist eine Gassondenvorrichtung auf, die mittels einer Aufhängevorrichtung an dem Unterboden in Fahrtrichtung hinter einer ersten Radachse angeordnet ist. Die Gassondenvorrichtung umfasst ein gasdichtes Rohr, das mehrere Anschlussstutzen aufweist. Von diesen Anschlussstutzen ist zumindest einer mit einer Leitung fluidisch verbunden, die ihrerseits mit einer Sensor- und Auswertevorrichtung fluidisch verbunden ist. Eine oder mehrere weitere vorliegende Anschlussstutzen sind jeweils mit einer Ansaugleitung verbunden. Diese Ansaugleitung dient vorteilhaft dazu, Gasproben aufzunehmen, die aus der Erdoberfläche austreten.

Das erfindungsgemäß als Geländefahrzeug ausgebildete Gasmessfahrzeug hat den Vorteil, dass es über fast beliebig unwegsamem Gelände bewegt werden kann - es nutzt also dazu, nicht lediglich austretendes Gas bspw. aus Gasleitungen bzw. aus einem Gasnetz, das innerstädtisch verlegt ist und sich unter gut befahrbaren Straßen befindet, zu erfassen. Durch die Möglichkeit, ein Geländefahrzeug zu nutzen, kann austretendes Gas, gleich ob es aus einer Gasversorgungsleitung eines Gasnetzes austritt, oder Gas, das sich durch natürliche Gasvorkommen unterirdisch entwickelt und an der Erdoberfläche austritt, gemessen werden.

Dabei sind Messungen unterschiedlichster Gase qualitativ und/oder quantitativ möglich.

Das erfindungsgemäße Gasmessfahrzeug umfasst als Aufhängevorrichtung eine Schutzschiene, die quer zu der Geländefahrzeuglängsachse am Unterboden des Geländefahrzeugs in Fahrtrichtung gesehen hinter eben der ersten Radachse angeordnet ist. In dieser Schutzschiene ist das gasdichte Rohr herausziehbar angeordnet

Indem die Gassondenvorrichtung vorteilhaft am Unterboden des Fahrzeugs vorliegt, wird sie nicht an der Vorderseite des Fahrzeugs vor diesem her in Bewuchs, Gestein, Unrat, Schmutz oder Ähnliches geschoben und entsprechend verschmutzt oder beschädigt, sondern befindet sich im Schutz des Unterbodens. Gestrüpp, Gräser und weiteres können daher durch ein entsprechend geländegängiges Fahrzeug wie bspw. ein Quad weggedrückt oder auf andere Weise beseitigt werden. Um die Gassondenvorrichtung optimal zu schützen ist zum einen die Schutzschiene ausgebildet; gemäß noch einer weiteren Ausführungsform des erfindungsgemäßen Gasmessfahrzeugs ist als Schutz ergänzend vorgesehen, dass die Anschlussstutzen, insbesondere die an denen die Ansaugleitungen angeordnet sind, der Fahrtrichtung entgegen weisen. Indem sie sich also nach hinten weg erstrecken, und indem sich folglich darauf aufgesteckte bzw. aufgeschobene Ansaugleitungen bzw. Ansaugschläuche auch nach hinten weg erstrecken wird auch eine Beschädigung durch Abreißen oder Abbrechen verhindert oder minimiert.

Nach einer weiteren Ausführungsform des erfindungsgemäßen Gasmessfahrzeugs ist die Schutzschiene der Gassondenvorrichtung wenigstens an einem Ende stirnseitig offen und weist an dem offenen Ende, respektive an der offenen Stirnseite, eine Sicherungsvorrichtung für das gasdichte Rohr auf, das in die Schutzschiene eingelegt ist. Besonders vorteilhaft ist das gasdichte Rohr in die Schutzschiene lösbar eingeschoben und kann so leicht herausgezogen und gereinigt oder gewartet werden.

Diese Sicherungsvorrichtung kann gemäß einer noch weiteren Ausführungsform einen Ring aufweisen, der an der Schutzschiene mittels einer Halterung montiert ist und die Schutzschiene nahe der Stirnseite umgibt, und der einen Sicherungsplint hat, der mit einer Aufnahmeöffnung korrespondiert und in diese eingesetzt werden kann, die die Schutzschiene nahe ihrer Stirnseite aufweist.

Nach einer noch weiteren Ausführungsform des erfindungsgemäßen Gasmessfahrzeuges ist das gasdichte Rohr an seiner Stirnseite bzw. an seinen Stirnseiten verschlossen. Hierzu kann bevorzugt eine gasdichte Schutzkappe, die lösbar auf das Rohrende geschoben oder in dieses eingesteckt ist, verwendet werden.

Schließlich kann nach noch einer weiteren Ausführungsform des erfindungsgemäßen Gasmessfahrzeuges dieses an dem Unterboden eine oder mehrere Haltevorrichtungen aufweisen, bspw. bevorzugt einen oder mehrere Haltewinkel. Diese sind am Unterboden einerseits montiert und andererseits mit der Schutzschiene verbunden und sichern diese zum einen und schützen sie andererseits vor Verschmutzung.

Nach noch einer weiteren Ausführungsform können die Ansaugleitungen für das Gas Ansaugschläuche sein. Die Ansaugschläuche können mit Rückhaltemitteln wie bspw. bevorzugt mit Schlauchschellen auf dem entsprechenden Anschlussstutzen gesichert sein.

Die Anschlussstutzen selbst können einstückig mit dem gasdichten Rohr gefertigt oder auf einfache Weise durch eine Schraubverbindung mit dem gasdichten Rohr verbunden sein. Die Schraubverbindung kann hergestellt werden, indem das gasdichte Rohr einen Gewindeabschnitt und der Anschlussstutzen einen entsprechend korrespondierenden Gewindeabschnitt aufweist. Hier kann eine Sicherung mittels einer Mutter erfolgen. Alternativ könnten die Anschlussstutzen auch durch Anschweißen mit dem gasdichten Rohr verbunden sein.

Schließlich kann nach noch einer weiteren Ausführungsform die Schutzschiene entlang ihrer Länge eine Ausnehmung, quasi einen Schlitz oder Spalt, aufweisen, deren/dessen Höhe geringer ist als der Durchmesser des gasdichten Rohrs. Vorteilhaft ist die Ausnehmung so beschaffen, dass das gasdichte Rohr mit samt seinen Anschlussstutzen, die sich im Montagezustand aus der Ausnehmung entgegen der Fahrtrichtung aus der Schutzschiene heraus erstrecken, leicht in die Schutzschiene eingeschoben werden kann, ohne jedoch aus dieser herauszufallen. Dazu ist die Ausnehmung oder der Schlitz so beschaffen, dass sie/er etwa vorliegende Muttern am Verbindungsende des Anschlussstutzen an das gasdichte Rohr zurückhält, oder alternativ auch bspw. eine Verdickung durch eine etwa dort vorliegende Schweißnaht, wenn der Anschlussstutzen an das gasdichte Rohr angeschweißt ist.

Die Sensor- und Auswertevorrichtung, die Teil des Gasmessvorrichtung ist, liegt geschützt in oder an dem Geländefahrzeug vor und die über eine Leitung, die bevorzugt als Schlauch ausgebildet ist, mit der Gassondenvorrichtung verbunden ist, weist Komponenten auf, wie eine oder mehrere Gassensoren, eine oder mehrere Ansaugpumpen, um das zu detektierende Gas über die Ansaugleitungen durch die Anschlussstutzen und weiter das gasdichte Rohr und schließlich noch weiter durch die Leitung, die eine Zuführleitung ist zu der Sensor- und Auswertevorrichtung, zu fördern.

Weiter weist diese auch Datenverarbeitungs- und zusätzlich gegebenenfalls Speichervorrichtungen auf.

Die Sensor- und Auswertevorrichtung kann lösbar, bspw. durchaus in einem entsprechenden Gehäuse, an dem Fahrzeug ganz oder temporär angeordnet sein.

Dass die Gassondenvorrichtung mit entsprechenden Energieversorgern gekoppelt sein muss, versteht sich von selbst. Der Fachmann weiß allerdings, wie derartige Gasmessvorrichtungen bzw. Gassondenvorrichtungen mit Energie versorgt werden.

Weitere Ausführungsformen sowie einige der Vorteile, die mit diesen und weiteren Ausführungsformen verbunden sind, werden durch die nachfolgende ausführliche Beschreibung unter Bezug auf die begleitenden Figuren deutlich und besser verständlich. Gegenstände oder Teile derselben, die im Wesentlichen gleich oder ähnlich sind, können mit denselben Bezugszeichen versehen sein. Die Figuren sind lediglich eine schematische Darstellung einer Ausführungsform der Erfindung

Dabei zeigen:
- **Fig. 1**: Seitenansicht eines Gasmessfahrzeugs,
- **Fig. 2**: Ausschnitt eines in perspektivischer Ansicht von unten gezeigten Gasmessfahrzeugs,
- **Fig. 3**: Seitenansicht eines Ausschnitts des Unterbodens mit Gassondenvorrichtung,
- **Fig. 4**: perspektivische Seitenansicht auf einen Ausschnitt der Gassondenvorrichtung, wobei das gasdichte Rohr aus der Schutzschiene ein Stück weit herausgezogen ist.

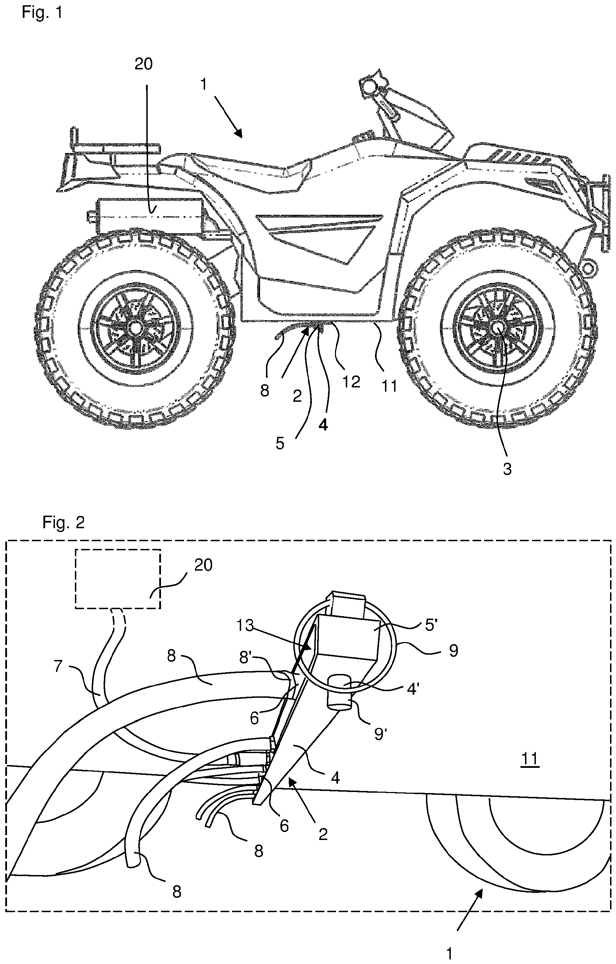

Die erfindungsgemäße Vorrichtung bezieht sich auf ein Gasmessfahrzeug 1, das dazu ausgebildet ist, Gasvorkommen in freiem Gelände über dem Boden des Geländes, bspw. in Feld, Wald oder über einer Wiese zu prüfen. Ein erfindungsgemäßes Gasmessfahrzeug 1 ist in **Fig. 1** dargestellt: Es ist dort ein robustes Allrad-Kleinfahrzeug mit Geländebereifung gezeigt.

Die erfindungsgemäße Gassondenvorrichtung 2 befindet sich, wie **Fig. 1** zeigt, am Unterboden 11 in Fahrtrichtung hinter der ersten Radachse 3 des Gasmessfahrzeugs 1. Man kann dort sehen, wie eine Ansaugleitung 8, die sich aus einem gasdichten Rohr 5 herauserstreckt, das in einer Schutzschiene 4 angeordnet ist, entgegen der Fahrtrichtung weist und somit geschützt am Unterboden des Fahrzeugs angebracht ist. **Fig. 1** zeigt außerdem die optionale Haltevorrichtung 12, die dort als Haltewinkel 12 ausgebildet ist und dazu dient, die Schutzschiene 4 (die eine Aufhängevorrichtung bildet, die aber grundsätzlich auch anders ausgebildet sein könnte), sicher am Unterboden 11 des Gasmessfahrzeugs 1 festzulegen. Der Haltewinkel dient aber nicht nur vorteilhaft der stabilen Befestigung der Schutzschiene 4, sondern schützt auch ergänzend vor Schmutz. Die Sensor- und Auswertevorrichtung 20, dort in einer Box angeordnet, befindet sich hinter dem Sitz des Gasmessfahrzeugs 1. Die Leitung, die die Sensor- und Auswertevorrichtung 20 mit dem gasdichten Rohr 5 fluidisch verbindet, ist von der Karosserie verdeckt.

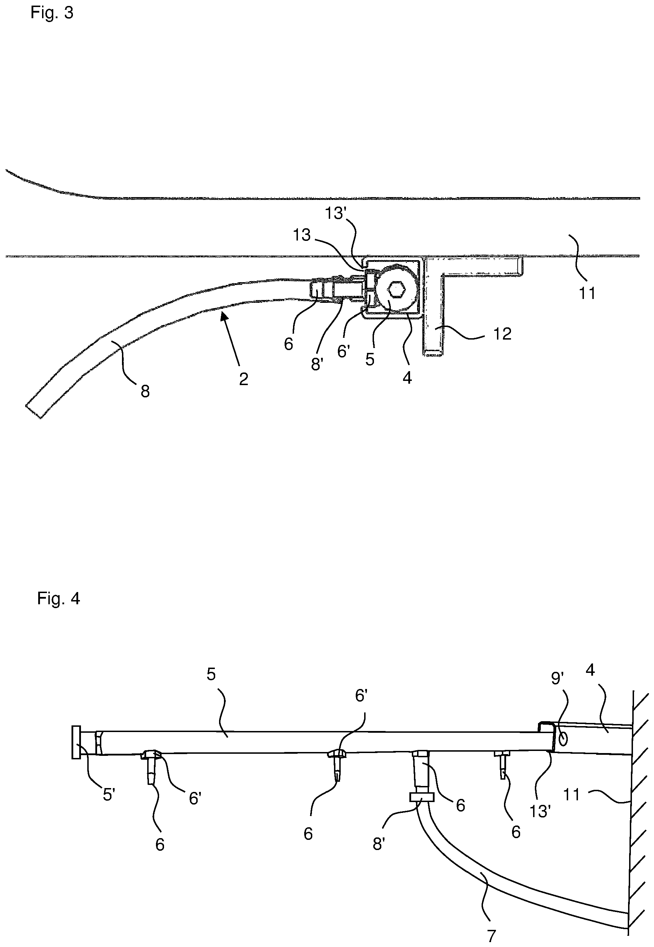

**Fig. 2** (der strichelierte Kasten verdeutlicht, dass die Abbildung nur einen Ausschnitt auf den Unterboden des Fahrzeugs mit der Gassondenvorrichtung zeigt) macht deutlich, dass die Gassondenvorrichtung 2 eine Vielzahl von Anschlussstutzen 6 aufweist, auf die Ansaugleitungen 8 aufgesetzt und auch gesichert sind. Die Sicherung kann, wie bspw. **Fig. 4** zeigt, mit Schlauchschellen 8' erfolgen. Wie gezeigt ist, weisen die Anschlussstutzen 8 entgegen der Fahrtrichtung zum Boden hin und sind so in der Lage über dem Erdboden im Gelände ansammelndes Gas aufzusaugen. Um das Gas zu fördern, verfügt die Gasmessvorrichtung über eine Sensor- und Auswertevorrichtung, der (schematisch in **Fig. 2** in einer strichelierten Box angedeutet) die erforderliche Anzahl Gassensoren, eine Datenverarbeitungs- und Speichervorrichtung aber auch eine oder mehrere Ansaugpumpen zugeordnet sind.

Ein Fluidpfad für das angesaugte Gas bis hin zu der Sensor- und Auswertevorrichtung verläuft über die Leitung 7, die bevorzugt auch ein Schlauch ist, und das gasdichte Rohr 5, und beginnt bei den Ansaugleitungen mit deren Öffnungen, die sich über dem Erdreich öffnen.

Der Ausschnitt der Gassondenvorrichtung 2, den **Fig. 4** zeigt, der das gasdichte Rohr 5, das in der Benutzungsanordnung, wenn also das Gasmessfahrzeug 1 in Betrieb ist und sich fahrend über den Boden wegbewegt und Gasvorkommen aufspürt und ansaugt, verdeutlicht die Herausziehbarkeit des gasdichten Rohrs 5 aus der Schutzschiene 4, in der es befestigt ist. Durch das Herausziehen kann die gesamte Vorrichtung sehr leicht gewartet, also auch gereinigt, repariert oder auf andere Weise gehandhabt werden. Damit das gasdichte Rohr 5 nicht unerwünscht aus der Schutzschiene 4 herausfällt, ist es in der Schutzschiene 4 entsprechend gesichert: Wie **Fig. 2** verdeutlicht, kann dazu bspw. der Sicherungsring 9 mit dem an diesem befestigten Sicherungssplint 9' dienen. Der Sicherungsring 9 ist mit einer Halterung auf der Schutzschiene 4 befestigt. Der Sicherungssplint ist bei in die Schutzschiene 4 eingeführtem Rohr 5 nahe der Stirnseite der Schutzschiene 4 in eine Bohrung 4' eingeführt. Er ist mit einer Schutzkappe 5`, in die er eingeführt ist, verbunden. Die Schutzkappe 5' verschließt das gasdichte Rohr 5 an ihrer Stirnseite. Durch die Festlegung des Splints 9' durch die Schutzschiene 4 in die Schutzkappe 5' wird sichergestellt, dass die Gasdichtigkeit des Rohrs 5 nicht beeinträchtigt ist.

Vorliegend ist als Schutzschiene 4 ein Vierkantrohr gezeigt, das entlang seiner Länge eine Ausnehmung 13 aufweist, die auf der Seite der Schutzschiene 4 vorliegt, die entgegen der Fahrtrichtung des Gasmessfahrzeugs 1 liegt. Diese Ausnehmung 13 ist so beschaffen, dass das Rohr 5 in der Schutzschiene 4 gehalten wird. Dazu kann das Rohr einen Umgriff 13' bilden, siehe **Fig. 4****.**

Grundsätzlich könnte die Schutzschiene 4 auch einen anderen als einen rechteckigen Querschnitt haben. Günstig ist es in jedem Fall, wenn eine Seite der Schutzschiene 4, die am Unterboden des Fahrzeugs bzw. an dem Haltewinkel 12, siehe **Fig. 2** **und** **3****,** zu befestigen ist, entsprechend abgeflacht ist und gut anliegt. **Fig. 3** verdeutlicht auch die Ausnehmung 13 und den Umgriff 13`: Dort ist eine Ausführungsform der Gassondenvorrichtung 2 dargestellt, in der die Ansaugleitung 8 als Schlauchstück ausgebildet ist, dessen eines Ende auf den Anschlussstutzen 6 aufgeschoben und mit einer Schlauchschelle 8' befestigt ist. Der Anschlussstutzen 6 selbst ist über eine Gewindeverbindung mit dem gasdichten Rohr 5 verbunden und durch eine Mutter 6' am Rohr 5 gesichert. Durch die geringe Höhe der Ausnehmung 13 wird das Rohr 5 in der Schutzschiene 4 gehalten.

Die Durchführung der Gasmessung an sich ist dem Fachmann bekannt, das Gas wird auf bekannte Weise über die Ansaugleitungen respektive Schläuche 8 angesaugt, durch das gasdichte Rohr 5 über die Schlauchleitung 7 in die Sensor- und Auswertevorrichtung 20, hierin nur schematisch gezeigt, überführt. Das Detektieren und qualitativ wie quantitativ Auswerten, Bewerten und auch Anzeigen ist dem Fachmann bekannt. Die entsprechende Sensor- und Auswertevorrichtung 20, die bspw. einen IR-Laser zur Analyse des Zielgases im Gasstrom umfassen kann, kann mit entsprechenden Energiequellen verbunden sein; die Anordnung der Sensor- und Auswertevorrichtung kann recht beliebig gehandhabt werden: So kann etwa die Leitung 7, die auch einen Zuführschlauch für das zu detektierende Gas sein kann, lösbar mit einem entsprechenden Stutzen einer Messkammer verbunden sein, in dem sich ein oder mehrere Sensoren befinden. Die Auswertung kann vor Ort vorgenommen werden und auch über entsprechende Displays angezeigt werden; die ermittelten Daten können ebenso gut an einen Bestimmungsort übertragen und dort weiter verwertet und bearbeitet werden.

### BEZUGSZEICHENLISTE

- 1: Geländefahrzeug
- 2: Gassondenvorrichtung
- 3: Radachse
- 4: Schutzschiene
- 4': Bohrung
- 5: Gasdichtes Rohr
- 5': Schutzkappe
- 6: Anschlussstutzen
- 6': Mutter
- 7: Leitung
- 8: Ansaugleitung / Anschlussstutzen
- 8': Schlauchschellen
- 9: Ring
- 9`: Sicherungssplint
- 11: Unterboden
- 12: Haltevorrichtung
- 13: Ausnehmung
- 13': Umgriff
- 20: Sensor- und Auswertevorrichtung

## Patentansprüche

1. Gasmessfahrzeug (1), ausgebildet zur Prüfung von Gasvorkommen in freiem Gelände, an dem eine Gasmessvorrichtung angeordnet ist, wobei die Gasmessvorrichtung eine Gassondenvorrichtung (2) aufweist, die ein gasdichtes Rohr (5) mit einer Mehrzahl Anschlussstutzen (6) aufweist, wobei zumindest ein Anschlussstutzen (6) mit einer Leitung (7) fluidisch verbunden ist, die mit einer Sensor- und Auswertevorrichtung (20) fluidisch verbunden ist, und wobei ein oder mehrere Anschlussstutzen (6) mit jeweils einer Ansaugleitung (8) verbunden sind,
**dadurch gekennzeichnet, dass**
das Gasmessfahrzeug (1) ein Geländefahrzeug (1) mit einem Allradantrieb ist, und dass die Gassondenvorrichtung (2) mittels einer Aufhängevorrichtung an einem Unterboden (11) in Fahrtrichtung hinter einer ersten Radachse (3) angeordnet ist, wobei die Aufhängevorrichtung eine Schutzschiene (4) ist, die quer zu der Geländefahrzeuglängsachse an dem Unterboden (11) in Fahrtrichtung hinter der ersten Radachse (3) angeordnet ist und in der das gasdichte Rohr (5) herausziehbar angeordnet ist.

2. Gasmessfahrzeug (1) nach Anspruch 1,
**dadurch gekennzeichnet, dass**
die Mehrzahl Anschlussstutzen (6) der Fahrtrichtung entgegen weist.

3. Gasmessfahrzeug (1) nach Anspruch 1 oder 2,
**dadurch gekennzeichnet, dass**
die Schutzschiene (4) zumindest einenends stirnseitig offen ist und an der offenen Stirnseite eine Sicherungsvorrichtung (9,9') für das gasdichte Rohr (5) aufweist.

4. Gasmessfahrzeug (1) nach Anspruch 3,
**dadurch gekennzeichnet, dass**
die Sicherungsvorrichtung einen die Schutzschiene (4) nahe der Stirnseite umgebenden Ring (9) mit einem Sicherungssplint (9') aufweist, und die Schutzschiene (4) eine nahe der Stirnseite vorliegende Aufnahmeöffnung (4') zur Aufnahme des Sicherungssplints (9') aufweist.

5. Gasmessfahrzeug (1) nach zumindest einem der Ansprüche 1 bis 4,
**dadurch gekennzeichnet, dass**
das gasdichte Rohr (5) an seinen Stirnseiten verschlossen, bevorzugt mit einer gasdichten Schutzkappe (5') lösbar verschlossen ist.

6. Gasmessfahrzeug (1) nach zumindest einem der Ansprüche 1 bis 5,
**dadurch gekennzeichnet, dass**
an dem Unterboden (11) zumindest eine Haltevorrichtung (12), bevorzugt zumindest ein Haltewinkel (12) befestigt und mit der Aufhängevorrichtung verbunden ist.

7. Gasmessfahrzeug (1) nach zumindest einem der Ansprüche 1 bis 6,
**dadurch gekennzeichnet, dass**
die Ansaugleitungen (8) Ansaugschläuche sind, die bevorzugt mit ersten Rückhaltemitteln, bevorzugt mit Schlauchschellen (8') auf den Anschlussstutzen gesichert sind.

8. Gasmessfahrzeug (1) nach zumindest einem der Ansprüche 1 bis 7,
**dadurch gekennzeichnet, dass**
- die Anschlussstutzen (6) an das gasdichte Rohr (5) angeschraubt und am Verbindungsende mittels Muttern (6') gesichert sind;
- die Anschlussstutzen (6) an das gasdichte Rohr (5) angeschweißt sind.

9. Gasmessfahrzeug (1) nach Anspruch 8,
**dadurch gekennzeichnet, dass**
die Schutzschiene (4) entlang ihrer Länge eine Ausnehmung (13) aufweist, deren Höhe geringer ist als der Durchmesser des gasdichten Rohrs (5).

10. Gasmessfahrzeug (1) nach zumindest einem der Ansprüche 1 bis 9,
**dadurch gekennzeichnet, dass**
die Sensor- und Auswertevorrichtung (20) Komponenten aus der Gruppe aufweist, die umfasst:
- einen oder mehrere Gassensoren,
- eine oder mehrere Ansaugpumpen,
- Datenverarbeitungs- und/oder Speichervorrichtungen.

## Claims

1. A gas measuring vehicle (1), formed for testing gas deposits in open terrain, on which a gas measuring device is arranged, wherein the gas measuring device has a gas probe device (2), which has a gas-tight tube (5) comprising a plurality of connecting pieces (6), wherein at least one connecting piece (6) is fluidically connected to a line (7), which is fluidically connected to a sensor and evaluation device (20), and wherein one or several connecting pieces (6) are each connected to an intake line (8),
**characterized in that**
the gas measuring vehicle (1) is an all-terrain vehicle (1) comprising an all-wheel drive, and that the gas probe device (2) is arranged by means of a suspension device on an underbody (11) behind a first wheel axle (3) in the direction of travel, wherein the suspension device is a protective rail (4), which is arranged transversely to the all-terrain vehicle longitudinal axis on the underbody (11) behind the first wheel axle (3) in the direction of travel and in which the gas-tight tube (5) is arranged so as to be capable of being pulled out.

2. The gas measuring vehicle (1) according to claim 1,
**characterized in that**
the plurality of connecting pieces (6) faces opposite the direction of travel.

3. The gas measuring vehicle (1) according to claim 1 or 2,
**characterized in that**
the protective rail (4) is open on the front side at least at one end and has a securing device (9, 9') for the gas-tight tube (5) on the open front side.

4. The gas measuring vehicle (1) according to claim 3,
**characterized in that**
the securing device has a ring (9) surrounding the protective rail (4) close to the front side comprising a safety pin (9'), and the protective rail (4) has a receiving opening (4') close to the front side for receiving the safety pin (9').

5. The gas measuring vehicle (1) according to at least any one of claims 1 to 4,
**characterized in that**
the gas-tight tube (5) is closed on its front sides, preferably releasably closed by means of a gas-tight protective cap (5').

6. The gas measuring vehicle (1) according to at least any one of claims 1 to 5,
**characterized in that**
at least one holding device (12), preferably at least one holding bracket (12), is fastened to the underbody (11) and is connected to the suspension device.

7. The gas measuring vehicle (1) according to at least any one of claims 1 to 6,
**characterized in that**
the intake lines (8) are intake hoses, which are secured on the connecting pieces, preferably by means of first retaining means, preferably by means of hose clamps (8').

8. The gas measuring vehicle (1) according to at least any one of claims 1 to 7,
**characterized in that**
- the connecting pieces (6) are screwed to the gas-tight tube (5) and are secured at the connecting end by means of nuts (6');
- the connecting pieces (6) are welded to the gas-tight tube (5).

9. The gas measuring vehicle (1) according to claim 8,
**characterized in that**
the protective rail (4) has a recess (13) along its length, the height of which is smaller than the diameter of the gas-tight tube (5).

10. The gas measuring vehicle (1) according to at least any one of claims 1 to 9,
**characterized in that**
the sensor and evaluation device (20) has components from the group, which comprises:
- one or several gas sensors,
- one or several intake pumps,
- data processing and/or storage devices.

## Revendications

1. Véhicule de mesure de gaz (1), conçu pour tester des gisements de gaz en terrain libre, sur lequel est disposé un dispositif de mesure de gaz, le dispositif de mesure de gaz présentant un dispositif de sonde de gaz (2) qui comporte un tube étanche au gaz (5) avec plusieurs tubulures de raccordement (6), au moins une tubulure de raccordement (6) étant reliée fluidiquement à une conduite (7) qui est reliée fluidiquement à un dispositif de détection et d'évaluation (20), et une ou plusieurs tubulures de raccordement (6) étant reliées chacune à une conduite d'aspiration (8), **caractérisé en ce que**
le véhicule de mesure de gaz (1) est un véhicule tout-terrain (1) à quatre roues motrices, et **en ce que** le dispositif de sonde de gaz (2) est disposé au moyen d'un dispositif de suspension sur un soubassement (11) dans le sens de la marche derrière un premier essieu (3), le dispositif de suspension étant un rail de protection (4) qui est disposé transversalement à l'axe longitudinal du véhicule tout-terrain sur le soubassement (11) dans le sens de la marche derrière le premier essieu (3) et dans lequel le tube étanche au gaz (5) est disposé de manière à pouvoir être extrait.

2. Véhicule de mesure de gaz (1) selon la revendication 1,
**caractérisé en ce que**
les plusieurs tubulures de raccordement (6) sont orientées dans le sens opposé au sens de la marche.

3. Véhicule de mesure de gaz (1) selon la revendication 1 ou 2,
**caractérisé en ce que**
le rail de protection (4) est ouvert au moins à une extrémité sur le côté frontal et comprend, sur le côté frontal ouvert, un dispositif de sécurité (9, 9') pour le tube étanche au gaz (5).

4. Véhicule de mesure de gaz (1) selon la revendication 3,
**caractérisé en ce que**
le dispositif de sécurité comprend un anneau (9) entourant le rail de protection (4) près de la face frontale, avec une goupille de sécurité (9'), et le rail de protection (4) comporte une ouverture de réception (4') près de la face frontale, pour recevoir la goupille de sécurité (9').

5. Véhicule de mesure de gaz (1) selon au moins l'une des revendications 1 à 4, **caractérisé en ce que**
le tube étanche au gaz (5) est fermé sur ses faces frontales, de préférence par une fermeture amovible au moyen d'un capuchon de protection étanche au gaz (5').

6. Véhicule de mesure de gaz (1) selon au moins l'une des revendications 1 à 5, **caractérisé en ce que**
au moins un dispositif de maintien (12), de préférence au moins une équerre de maintien (12), est fixé sur le soubassement (11) et est relié au dispositif de suspension.

7. Véhicule de mesure de gaz (1) selon au moins l'une des revendications 1 à 6, **caractérisé en ce que**
les conduites d'aspiration (8) sont des tuyaux d'aspiration qui sont de préférence fixés sur les tubulures de raccordement par des premiers moyens de retenue, de préférence par des colliers de serrage (8').

8. Véhicule de mesure de gaz (1) selon au moins l'une des revendications 1 à 7, **caractérisé en ce que**
- les tubulures de raccordement (6) sont vissées sur le tube étanche au gaz (5) et bloquées à l'extrémité de raccordement au moyen d'écrous (6') ;
- les tubulures de raccordement (6) sont soudées sur le tube étanche au gaz (5).

9. Véhicule de mesure de gaz (1) selon la revendication 8,
**caractérisé en ce que,**
le rail de protection (4) comporte sur sa longueur un évidement (13) dont la hauteur est inférieure au diamètre du tube étanche au gaz (5).

10. Véhicule de mesure de gaz (1) selon au moins l'une des revendications 1 à 9, **caractérisé en ce que**
le dispositif de détection et d'évaluation (20) comprend des composants du groupe, englobant :
- un ou plusieurs capteurs de gaz,
- une ou plusieurs pompes d'aspiration,
- des dispositifs de traitement de données et/ou de mémoire.
